# EUROPÄISCHE PATENTSCHRIFT

(11) **EP 3 021 051 B1**
(45) Veröffentlichungstag und Bekanntmachung des Hinweises auf die Patenterteilung: **26.07.2017**
(21) Anmeldenummer: 15182381.2
(22) Anmeldetag: 25.08.2015
(51) Int. Cl.: F24F 7/007, F24D 19/00

(54) **VORRICHTUNG ZUM HEIZEN UND/ODER KÜHLEN MIT EINER VENTILATOREINHEIT SOWIE EIN VERFAHREN ZUR ANBRINGUNG EINER SOLCHEN VENTILATOREINHEIT**
DEVICE FOR HEATING AND/OR COOLING WITH A VENTILATOR UNIT AND A METHOD FOR ATTACHING SUCH A VENTILATOR UNIT
DISPOSITIF DESTINÉ À CHAUFFER ET/OU A REFROIDIR À L'AIDE D'UNE UNITÉ DE VENTILATEUR ET PROCÉDÉ DESTINÉ A INSTALLER UNE TELLE UNITÉ DE VENTILATEUR

(30) Priorität: 14.11.2014 DE 102014116690
(43) Veröffentlichungstag der Anmeldung: 18.05.2016
(73) Patentinhaber: Caradon Stelrad B.V., 2200 Herentals (BE)
(72) Erfinder: Biekens, Lara, 2000 Antwerpen (BE)
(74) Vertreter: Bauer, Dirk

(56) Entgegenhaltungen:
- EP-A1- 2 469 194
- WO-A1-2007/042894
- DE-A1- 19 908 403
- DE-U1-202008 005 825

## Beschreibung

Die Erfindung betrifft eine Vorrichtung zum Heizen und/oder Kühlen mit zumindest einem Wärmeübertrager zur Übertragung von Wärme auf Luft, und mindestens einer Ventilatoreinheit, die die zu temperierende Luft von unten nach oben über zumindest einen Teilabschnitt der Vorrichtung an dem mindestens einen Wärmeübertrager vorbei leitet, wobei die Vorrichtung an einer Unterseite eine Öffnung aufweist, durch die die mindestens eine Ventilatoreinheit aus einer äußeren Umgebung der Vorrichtung in einen inneren Freiraum der Vorrichtung führbar ist und die mindestens eine Ventilatoreinheit langgestreckt und starr ausgebildet ist und eine in Längsrichtung der Vorrichtung betrachtete Länge der Öffnung größer als eine Länge der mindestens einen Ventilatoreinheit ist.

Weiterhin betrifft die Erfindung ein Verfahren zur Anbringung der mindestens einen Ventilatoreinheit in dem inneren Freiraum der Vorrichtung.

Im Sinne der vorliegenden Anmeldung kann die Vorrichtung und der in ihr enthaltene Wärmeübertrager sowohl zum Heizen als auch zum Kühlen eines Raumes verwendet werden. In einem Heizfall würde der Wärmeübertrager typischerweise eine Temperatur aufweisen, die über der bisher vorhandenen Raumtemperatur liegt. Wohingegen die Temperatur des Wärmeübertragers in einem Kühlfall unter der Raumtemperatur liegt.

### Stand der Technik

Vorgenannte Vorrichtungen sind allgemein bekannt und werden zur Beheizung und/oder Kühlung von Räumen verwendet.

Der Wärmeübertrager heizt oder kühlt die Luft in einem Raum mittels Konvektion und/oder Strahlung. Die durch Strahlung verursachte Energieübertragung ist häufig angenehmer für die sich in dem Raum aufhaltenden Personen und führt zu einem behaglicheren Raumklima. Allerdings ist bei der Konvektion eine große Wärmeübertragungsleistung, bezogen auf die Baugröße, insbesondere das Volumen der Vorrichtung, möglich. Dies ist insbesondere dann wünschenswert, wenn ein hoher Temperaturunterschied zwischen der gewünschten und der vorhandenen Temperatur in einem Raum vorhanden ist, da mittels der konvektiven Wärmeübertragung ein schnelleres Erreichen der Solltemperatur möglich ist. Um den Wärmeaustausch über das mittels freier Konvektion mögliche Maß noch weiter zu beschleunigen, befindet sich an der Vorrichtung noch die mindestens eine Ventilatoreinheit. Mittels dieser mindestens einen Ventilatoreinheit kann eine zusätzliche erzwungene Konvektion erzeugt werden.

Die mindestens eine Ventilatoreinheit wird typischerweise derart relativ zu dem Wärmeübertrager angeordnet, dass diese die zu temperierende Luft von unten nach oben (insbesondere im Heizfall) an dem Wärmeübertrager entlang leitet, wobei die Luft über eine möglichst große Strecke mit dem Wärmeübertrager in Kontakt treten sollte. Derartige Vorrichtungen gehen beispielsweise aus der DE 20 2008 005 825 U1, EP 1 666 808 A1, WO 2010/012142 A1 und der GB1,128,559 A hervor. Bei allen vier Vorrichtungen ist aufgrund ihrer Bauweise vorgesehen, dass der Wärmeübertrager mitsamt der Ventilatoreinheit in einer Einbauposition fest montiert wird. Ein Sichtschutz verhindert, dass die Ventilatoreinheit von einem Außenbereich sichtbar ist. Nachteilig an diesen Vorrichtungen ist allerdings, dass bei einem Defekt der Ventilatoreinheit nicht nur diese, sondern die gesamte Vorrichtung ausgebaut werden muss. Dies ist insbesondere dann besonders nachteilig, wenn Wasser oder ein anderes Medium durch den Wärmeübertrager hindurch geleitet wird. EP 1 666 808 A1 offenbart dabei eine Vorrichtung mit den Merkmalen des Oberbegriffs von Anspruch 1.

Ein vereinfachter Austausch der Ventilatoreinheit ist mittels der in der AT 511 296 A1 dargestellten Vorrichtung möglich. Die Vorrichtung weist einen Heiz-Kühlkörper mit einer Heizplatte, an der sich zumindest ein Konvektorblech befindet, auf. Mittels mehrerer flexibel untereinander zu einer Ventilatoreinheit verbundener einzelner Ventilatoren soll die Luft von unten nach oben über zumindest einen Teilabschnitt der Heizplatte beziehungsweise eines an dieser angeordneten Konvektors gefördert werden. Die Ventilatoreinheit wird an einem Träger, der an der Heizplatte befestigt ist, angeordnet, in dem sie in einer möglichst schrägen Stellung auf diesen Träger geschoben werden.

Mittels dieser Vorrichtung kann der Austausch einzelner kleinerer flexibel beziehungsweise gelenkig miteinander verbundener Ventilatoren vereinfacht werden. Allerdings können die flexiblen Stränge, welche die einzelnen Ventilatoren miteinander verbinden, leicht beschädigt werden, so dass beispielsweise kein elektrischer Kontakt der Ventilatoreinheiten mehr gewährleistet werden kann. Als Einzelventilator werden meist PC-Lüfter verwendet, die zwar kostengünstig sind, aber in Bezug auf Langlebigkeit, Geräuschniveau, erreichbarem Volumenstrom und Energieverbrauch letztlich nicht überzeugen können.

Eine langgestreckte und starr ausgebildete Ventilatoreinheit, die ohne eine vollständige Demontage der Vorrichtung bei einem Defekt ausgetauscht werden kann, geht aus der US 7,789,129 B1 hervor. Diese Vorrichtung weist jedoch einen optischen Nachteil gegenüber den vorgenannten Vorrichtungen auf, da die Ventilatoreinheit von einem Außenbereich her sichtbar angeordnet wird.

Der vorliegenden Erfindung liegt nunmehr die Aufgabe zugrunde, die vorgenannte Vorrichtung und ein Verfahren zur Anbringung der mindestens einen Ventilatoreinheit derart weiterzuentwickeln, dass ein Austausch, eine Wartung, eine Reparatur oder eine Reinigung der mindestens einen Ventilatoreinheit möglichst derart durchgeführt werden kann, dass auf eine Demontage der gesamten Vorrichtung verzichtet werden kann und die Vorrichtung von einem Außenbereich her ansehnlich ist.

### Lösung

Ausgehend von einer Vorrichtung der eingangs beschriebenen Art wird die zugrunde liegende Aufgabe durch eine Vorrichtung mit den Merkmalen von Anspruch 1 gelöst. Bevorzugte Ausführungsformen sind in den Unteransprüchen definiert. Erfindungsgemäß ist der innere Freiraum so beschaffen, dass die mindestens eine Ventilatoreinheit im Anschluss an eine horizontale Bewegung in eine Zwischenstellung, in der sich die mindestens eine Ventilatoreinheit unterhalb der Vorrichtung befindet, in eine Einbaustellung überführbar ist, in der die mindestens eine Ventilatoreinheit sich im Vergleich mit der Zwischenstellung in einer in eine vertikale Richtung erhöhten Position befindet.

Das heißt also, dass die mindestens eine Ventilatoreinheit von einem Außenbereich in horizontale Richtung unter die Vorrichtung in eine Zwischenstellung überführt wird. Aus dieser Zwischenstellung heraus wird die mindestens eine Ventilatoreinheit entweder vollständig in eine vertikale Richtung in den Freiraum hinein bewegt oder es findet eine Kippbewegung der Ventilatoreinheit statt, sodass zu erst ein erstes Ende der Ventilatoreinheit vertikal nach oben in den Freiraum hineingeführt wird und anschließend ein zweites Ende, wie später noch genauer beschrieben wird. Die mindestens eine Ventilatoreinheit befindet sich nunmehr in der Einbaustellung, sodass diese in einem vertikalen Abstand zu der Zwischenstellung angeordnet ist. Daraus ergibt sich der Vorteil, dass die mindestens eine Ventilatoreinheit nachträglich an oder in der Vorrichtung angebracht werden kann und trotzdem derart in dem Freiraum angeordnet ist, dass diese von einem Außenbereich her nicht sichtbar ist und die Vorrichtung somit optisch ansehnlich bleibt.

Die starre Ausbildung der Ventilatoreinheit vereinfacht die Herstellung, den Transport und die Lagerung der mindestens einen Ventilatoreinheit. Hinzu kommt, dass während der Anbringung ein mögliches Risiko einer Beschädigung der Ventilatoreinheit verringert wird, da beispielsweise die flexiblen Verbindungen zwischen den aus dem Stand der Technik bekannten einzelnen, gekoppelten Ventilatoren nicht vorhanden sind.

Die Öffnung ist von der äußeren Umgebung der Vorrichtung her zugänglich, so dass die starre Ventilatoreinheit ohne Weiteres in die Vorrichtung eingesetzt werden kann. Daraus ergibt sich der Vorteil, dass die Vorrichtung, welche typischerweise fest an einer Wand oder auf einem Fußboden angeordnet ist, nicht vollständig demontiert werden muss, um die mindestens eine Ventilatoreinheit beispielsweise auszutauschen, zu reparieren oder zu reinigen. Dies ist insbesondere dann vorteilhaft, wenn der Wärmeübertrager mit Wasser durchströmt wird, da vor einer Demontage der Vorrichtung die Verbindung der Wasser führenden Leitungen (Vorlauf, Rücklauf) getrennt und mitunter, das Wasser entnommen und anschließend wieder aufgefüllt werden müsste.

An dieser Stelle sei vermerkt, dass Vor- und Rücklaufrohre, insbesondere in vertikaler Ausrichtung, durch die Öffnung verlaufen können. Auch können in dem Öffnungsquerschnitt oder im inneren Freiraum der Vorrichtung ein Vorlauf- und/oder ein Rücklaufanschluss (sog. Mittenanschluss) vorhanden sein, so dass sich beidseitig derartiger Einbauten jeweils ein Teilquerschnitt der Öffnung befindet oder aber zwei völlig getrennte separate Öffnungen existieren.

Die Vorrichtung weist eine vordere und eine hintere, eine obere und eine untere sowie zwei seitliche Begrenzungsebenen auf. Die beiden seitlichen Begrenzungsebenen sind senkrecht zu einer von einer von einem Boden gebildeten horizontalen Fläche und von einer Wand gebildeten vertikalen Fläche angeordnet, wohingegen die vordere und hintere Begrenzungsebene der Vorrichtung senkrecht zu der horizontalen Fläche und parallel zu der vertikalen Fläche ausgerichtet sind. Die obere Begrenzungsebene und die untere Begrenzungsebene verlaufen parallel zu der horizontalen Fläche und senkrecht zur vertikalen Fläche. Dabei ist vorgesehen, dass ein Abstand zwischen der unteren Begrenzungsebene der Vorrichtung und dem Boden mindestens einer Höhe der Ventilatoreinheit entspricht, so dass die Ventilatoreinheit in eine horizontale Richtung von vorn unter die Vorrichtung in die Zwischenstellung geführt werden kann, bevor die Ventilatoreinheit annähernd senkrecht nach oben durch die Öffnung in den Freiraum in ihre Einbaustellung geführt wird. Die Länge der Öffnung ist größer als die Länge der starren langgestreckten Ventilatoreinheit, wodurch die starre Ventilatoreinheit als ganzes durch die Öffnung passt. Die Ventilatoreinheit kann dabei sowohl in eine annähernd vertikale Richtung als auch durch ein leichtes Verkippen der Ventilatoreinheit in den Freiraum überführt werden, wobei das Verkippen dann insbesondere einem Verriegeln beziehungsweise Einrasten der Vertikaleinheit in die Einbaustellung dient.

Der mindestens eine Wärmeübertrager bildet vorteilhafterweise zumindest die vordere Begrenzungsebene, so dass die mindestens eine Ventilatoreinheit in der Einbaustellung nicht sichtbar ist. Dabei kann vorgesehen sein, dass die hintere Begrenzungsebene von einem zweiten Wärmeübertrager gebildet wird. In diesem Fall wäre die mindestens eine Ventilatoreinheit vorzugsweise zwischen den beiden Wärmeübertragern angeordnet. Ist kein weiterer Wärmeübertrager vorhanden, bildet eine zu der vorderen Begrenzungsebene parallele Tangentialebene, an der Rückseite der Vorrichtung die hintere Begrenzungsebene, somit kann die hintere Begrenzungsebene beispielsweise auch von einer dem Wärmeübertrager abgewandten Seite der Ventilatoreinheit gebildet sein.

Um eine möglichst große Wärmeübertragung zu gewährleisten, ist erfindungsgemäß vorgesehen, dass die Länge der Ventilatoreinheit mindestens 50%, vorzugsweise mindestens 60%, weiter vorzugsweise 70% einer horizontalen Länge der Vorrichtung entspricht. Folglich ist der mit Luft durchströmte Teilabschnitt des Wärmeübertragers recht groß, weshalb eine effiziente Kühlung oder Heizung eines Raumes stattfinden kann. Die Länge der Ventilatoreinheit ist dabei allerdings nicht größer als die Länge der Öffnung. Es ist durchaus denkbar, dass zwei langgestreckte Ventilatoreinheiten, welche vorzugsweise eine Länge von nahezu 50% der horizontalen Länge der Vorrichtung aufweisen, in der Einbaustellung nebeneinander angeordnet sein können, so dass die Vorrichtung über ihre gesamte Länge durchströmt wird. Dies ist insbesondere dann vorteilhaft, wenn sich in der Mitte der Vorrichtung Anschlussrohre befinden, welche durch die Öffnung hindurch verlaufen.

Vorteilhafterweise weist die mindestens eine Ventilatoreinheit eine Länge von mindestens 40 cm, vorzugsweise mindestens 50 cm, weiter vorzugsweise mindestens 60 cm, auf. Insbesondere bei sehr langen Vorrichtungen kann somit die Anzahl der Ventilatoreinheiten gering gehalten werden (meist ist nur eine einzige Ventilatoreinheit vorhanden), wobei dennoch eine ausreichende Heizung oder Kühlung der Luft gewährleistet werden kann. Bevorzugt ist weiterhin vorgesehen, dass zwischen der Vorrichtung und der mindestens einen Ventilatoreinheit zumindest eine Steckverbindung vorhanden ist. Die Ventilatoreinheit kann in die mindestens eine Steckverbindung einrasten, so dass die Ventilatoreinheit in ihrer Einbaustellung fixiert und nicht mehr ungewollt lösbar ist. Dadurch wird verhindert, dass Kinder die Ventilatoreinheit entnehmen können, oder dass die Ventilatoreinheit bei einem Stoß, beispielsweise durch einen Staubsauger, herausfallen kann. Alternativ oder zusätzlich auf einer der Steckverbindung gegenüber liegenden Seite der Ventilatoreinheit kann eine Einschubverbindung angeordnet sein, so dass die Ventilatoreinheit über eine "Einschiebbewegung" mit der Vorrichtung verbunden werden kann.

In konstruktiver Hinsicht ist es besonders vorteilhaft, wenn die Ventilatoreinheit ein Tangentialventilator ist, wobei eine Welle einer Ventilatorwalze horizontal verläuft. Ein Tangentialventilator zeichnet sich dadurch aus, dass dieser die Luft mittels der Ventilatorwalze tangential zu dieser ansaugt und auch tangential wieder ausbläst, vorzugsweise wird die Luft horizontal also parallel zur unteren Begrenzungsebene der Vorrichtung angesaugt und anschließend vertikal, also parallel zur vorderen und unteren Begrenzungsebene, wieder ausgeblasen. Diese Ausströmrichtung der Luft gewährleistet, dass die Luft möglichst großflächig entlang des mindestens einen Wärmeübertragers strömt und ein ausreichender Wärmeaustausch stattfindet.

Vorteilhafterweise ist vorgesehen, dass die Ventilatoreinheit in ihrer Einbaustellung bündig an die Öffnung anschließt. Daraus ergibt sich der Vorteil, dass der größte Teil einer mit Luft durchströmten Fläche des Wärmeübertragers über der Ventilatoreinheit liegt und eine bestmögliche Aufheizung oder Abkühlung der Luft erreicht werden kann. Wäre die Ventilatoreinheit beispielsweise mit einem gewissen Abstand zur Öffnung angeordnet, also so dass der Abstand zwischen der oberen Bezugsebene und der Ventilatoreinheit kleiner wird, könnte der Teil des Wärmeübertragers, der sich nunmehr unterhalb der Ventilatoreinheit befindet, nicht zur Aufheizung der Luft verwendet werden, da dieser Teil nicht von der Luft durchströmt wird.

Eine vorteilhafte Ausgestaltung der Erfindung sieht vor, dass der Wärmeübertrager als Heizplatte ausgebildet ist, an der vorzugsweise zumindest ein Konvektor angeordnet ist. Vorzugsweise wird die Luft von der jeweiligen Ventilatoreinheit entlang der Konvektoren geleitet, weshalb die Fläche, an der eine Wärmeübertragung stattfinden kann, vergrößert wird. Infolgedessen wird der Wirkungsgrad der Vorrichtung erhöht und ein Raum kann schneller aufgeheizt oder abgekühlt werden.

Alternativ ist vorgesehen, dass der Wärmeübertrager von Rohren gebildet wird. Die Rohre können einen beliebigen Querschnitt und Abstand zueinander besitzen. Sind Rohre mit einem flachen Rechteckquerschnitt übereinander angeordnet, so spricht man meist von einer so genannten Heizwand. Dadurch kann die Vorrichtung beispielsweise auch zum Aufhängen von Handtüchern oder ähnlichem verwendet werden. Zudem wird die Oberfläche, an der eine Wärmeübertragung stattfindet, im Verhältnis zu einer einfachen Heizplatte ohne Konvektoren vergrößert.

Vorteilhafterweise weist der Wärmeübertrager mindestens eine fluiddurchströmbare Komponente auf. Das heißt beispielsweise, dass die mindestens eine Heizplatte oder die Rohre des Wärmeübertragers von dem Fluid durchströmt werden. Das Fluid überträgt in einem Heizfall seine Wärme auf den Wärmeübertrager und dieses gibt wiederum die Wärme an die Luft ab. Alternativ überträgt die Luft in einem Kühlfall die Wärme auf den Wärmeübertrager, welcher anschließend seine Wärme an das Fluid abgibt. Infolgedessen wird die Luft abgekühlt und die Wärme über das Fluid aus dem Raum abgeführt.

Eine konstruktive Ausgestaltung der Erfindung sieht vor, dass die Vorrichtung noch einen weiteren Wärmeübertrager aufweist, wobei dieser weitere Wärmeübertrager vorzugsweise oberhalb oder unterhalb der Ventilatoreinheit und vorzugsweise hinter dem Wärmeübertrager gemäß Anspruch 1 oder zwischen den zwei Wärmeübertragern angeordnet ist, wobei der weitere Wärmeübertrager mindestens ein fluiddurchströmbares Elemente und/oder eine elektrische Heizeinrichtung aufweist. Der weitere Wärmeübertrager kann beispielsweise in Form eines Zusatzwärmetauschers vorliegen. Mittels des oberhalb der mindestens einen Ventilatoreinheit angeordneten weiteren Wärmeübertragers ist eine noch schnellere Aufheizung oder Abkühlung eines Raumes möglich. Der weitere Wärmeübertrager kann sowohl zum Kühlen als auch zum Heizen eingesetzt werden. Das heißt, dass im Falle eines Vorhandenseins einer elektrischen Heizeinrichtung, diese elektrische Heizeinrichtung auch eine elektrische Kühleinrichtung oder eine elektrische Heiz- und Kühleinrichtung sein kann. Sollte der weitere Wärmeübertrager alternativ oder zusätzlich das mindestens eine fluiddurchströmte Element aufweisen, ist in einer Weiterentwicklung der Erfindung vorgesehen, dass die mindestens eine fluiddurchstömbare Komponente des Wärmeübertragers und das mindestens eine fluiddurchströmbare Element des weiteren Wärmeübertragers in Reihe oder parallel geschaltet sind. Daraus ergibt sich der Vorteil, dass das Fluid besonders effizient zur Kühlung oder Heizung verwendet werden kann.

Ferner betrifft die Erfindung ein Verfahren mit den Merkmalen von Anspruch 12. Die Vorrichtung ist typischerweise an einer Wand oder auf einem Boden fest montiert, wobei der Abstand zwischen dem Boden und der auf diesem Boden oder an einer Wand montierten Vorrichtung mindestens der Höhe der mindestens einen Ventilatoreinheit entspricht. Infolgedessen kann die mindestens eine langgestreckte und starre Ventilatoreinheit von einer äußeren Umgebung der Vorrichtung in horizontale Richtung von vorn unter die Vorrichtung geführt werden. Das heißt, die Ventilatoreinheit wird auf einer dem Raum zugewandten Seite, also der vorderen Begrenzungsebene, welche im montierten Zustand der Vorrichtung sichtbar ist, in eine horizontale Richtung unter die Vorrichtung geführt, sodass sich die Ventilatoreinheit in der Zwischenstellung befindet. An der Unterseite der Vorrichtung befindet sich die Öffnung, durch welche die mindestens eine Ventilatoreinheit geführt wird, wobei die im Wesentlichen horizontal ausgerichtete Ventilatoreinheit in eine annähernd vertikale Richtung durch die Öffnung in den Freiraum in ihre Einbaustellung geführt werden kann. Die sich daraus ergebenden Vorteile entsprechen den zu Anspruch 1 angeführten Vorteilen.

Die Durchführung der Ventilatoreinheit durch die Öffnung in eine annährend vertikale Richtung sieht unter anderem vor, dass zunächst ein erstes Ende der langgestreckten Ventilatoreinheit und anschließend ein zweites dem ersten gegenüberliegenden Ende der Ventilatoreinheit durch die Öffnung in der Unterseite der Vorrichtung geführt wird. Ein leichtes Verkippen der Ventilatoreinheit soll somit ebenfalls von der Definition einer annährend vertikalen Richtung abgedeckt sein, wobei das Verkippen dann insbesondere einem Verriegeln beziehungsweise Einrasten der Vertikaleinheit in der Einbaustellung dient.

Um dies zu ermöglichen ist vorzugsweise vorgesehen, dass zunächst das erste Ende der Ventilatoreinheit und anschließend das zweite Ende der Ventilatoreinheit mechanisch in der Vorrichtung einrasten. Dabei ist vorzugsweise vorgesehen, dass die Ventilatoreinheit nur dann aus der Vorrichtung entnommen werden kann, wenn dieses gewünscht ist.

Die Überführung der Ventilatoreinheit von der Zwischenstellung in die Einbaustellung kann alternativ auch durch eine reine vertikale Bewegung der gesamten Ventilatoreinheit durch die Öffnung geschehen, ohne dass eine rotatorische Bewegungskomponente vorliegt. Vorteilhafterweise kann die mindestens eine Ventilatoreinheit werkzeuglos befestigt und entnommen werden. Dementsprechend kann eine Befestigung und eine Entnahme ohne vorherige Vorbereitungen und rein manuell durchgeführt werden.

Schließlich kann noch vorgesehen sein dass an einer Steckverbindung mit der mechanischen Einrastung gleichzeitig ein elektrischer Kontakt zwischen der Ventilatoreinheit und der Vorrichtung hergestellt wird. Ein umständliches Abklemmen von Kabeln bei jeder Entnahme der Ventilatoreinheit und ein späteres Wieder-Anklemmen entfallen somit. Die Kabelverlegung kann einmalig mit der Anbringung der Vorrichtung erfolgen. Die mechanische und elektrische Verbindung erfolgen somit automatisch synchron. Insbesondere wenn ein weiterer Wärmeübertrager elektrisch ausgestaltet ist, ist bereits eine elektrische Verbindung vorhanden, mit welcher die Ventilatoreinheit elektrisch verbunden werden kann.

### Ausführungsbeispiele

Die vorstehend beschriebene Erfindung wird nachfolgend anhand eines Ausführungsbeispieles, welches in den Figuren dargestellt wird, näher erläutert.

Es zeigt:
- Fig. 1:: eine Rückseite einer erfindungsgemäßen Vorrichtung mit einer Öffnung und einen Freiraum,
- Fig. 2:: eine Rückseite der erfindungsgemäßen Vorrichtung gemäß Figur 1, wobei eine Ventilatoreinheit unter die Vorrichtung zur Öffnung in die Zwischenstellung geführt wird,
- Fig. 3:: eine Rückseite der erfindungsgemäßen Vorrichtung gemäß Figur 1, wobei die Ventilatoreinheit aus der dargestellten Zwischenstellung durch die Öffnung vertikal nach oben geführt wird,
- Fig. 4:: eine Rückseite der erfindungsgemäßen Vorrichtung gemäß Figur 1, wobei ein erstes Ende der Ventilatoreinrichtung an der Vorrichtung befestigt wird,
- Fig. 4a:: vergrößerte Darstellung einer Steckverbindung zwischen der erfindungsgemäßen Vorrichtung und dem ersten Ende der Ventilatoreinheit gemäß Figur 6,
- Fig. 5:: eine Rückseite der erfindungsgemäßen Vorrichtung gemäß Figur 1, wobei ein zweites Ende der Ventilatoreinheit mit der erfindungsgemäßen Vorrichtung verbunden wird,
- Fig. 5a:: eine vergrößerte Darstellung der Steckverbindung zwischen dem ersten Ende der Ventilatoreinheit und der Vorrichtung im eingerasteten Zustand,
- Fig. 5b:: eine vergrößerte Darstellung eines zweiten Endes der Ventilatoreinheit und einer zweiten Steckverbindung,
- Fig. 5c:: eine vergrößerte Darstellung des zweiten Endes der Ventilatoreinheit und einem Stecker aus einer zweiten Perspektive,
- Fig. 6:: eine Rückseite der erfindungsgemäßen Vorrichtung gemäß Figur 1, wobei sich die Ventilatoreinheit in einer Einbaustellung befindet, und
- Fig. 6a:: eine vergrößerte Darstellung des Steckers der Vorrichtung.

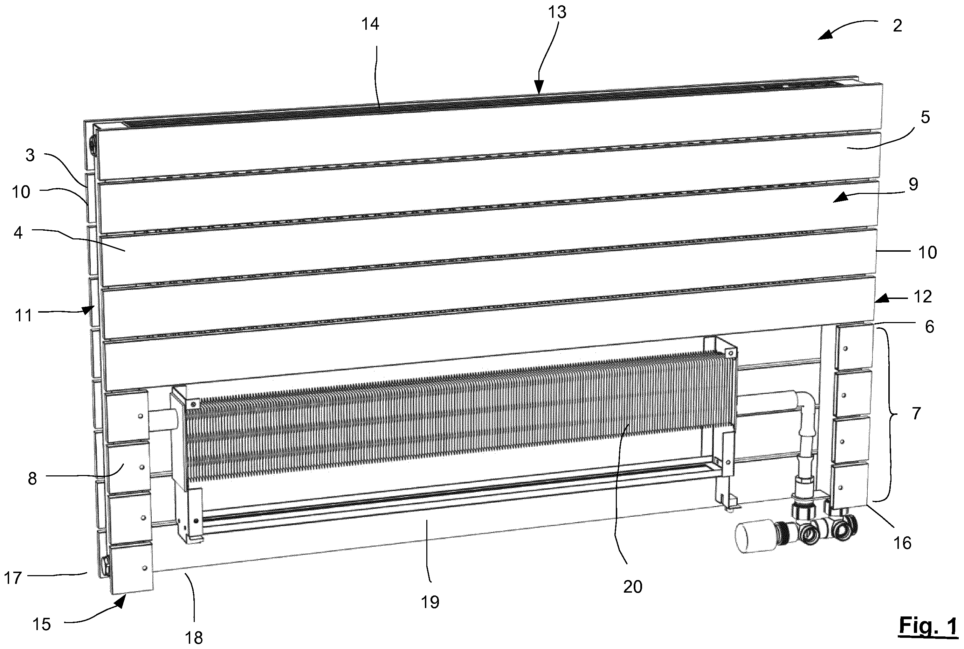

In den Figuren 1 bis 6 wird schrittweise ein erfindungsgemäßes Verfahren dargestellt, bei dem eine Ventilatoreinheit **1** in eine erfindungsgemäße Vorrichtung **2** eingebaut wird, wobei die Vorrichtung **2** fest an einer hier nicht dargestellten Wand eines Gebäudes montiert ist. Eine von der Wand abgewandte Seite, also hier nicht sichtbare Seite, der Vorrichtung **2** ist einer äußeren Umgebung der Vorrichtung **2** zugewandt.

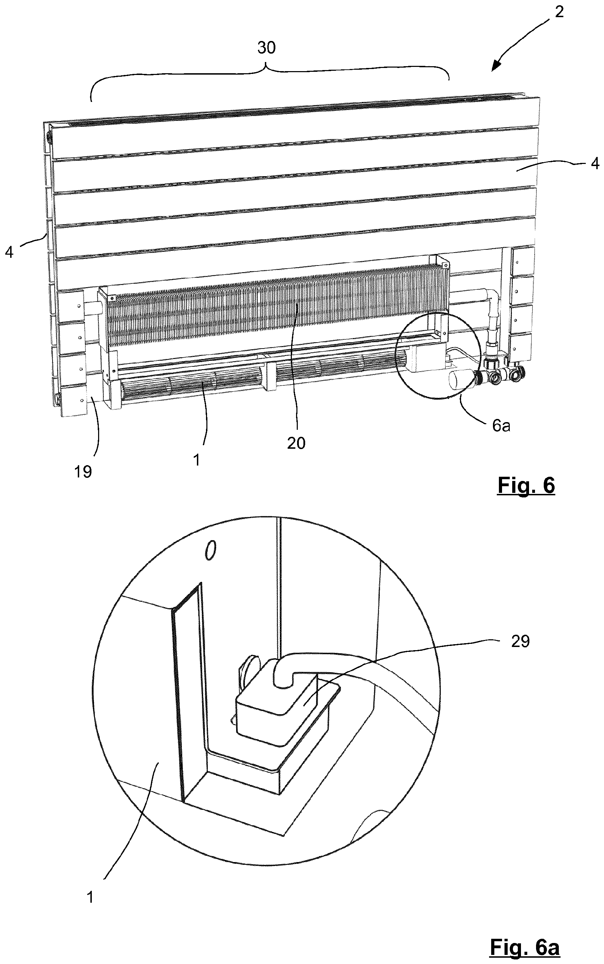

Die Figur 1 zeigt eine Rückseite der erfindungsgemäßen Vorrichtung **2** in der die langgestreckte Ventilatoreinheit **1** in eine Einbaustellung gemäß Figur 6 überführt werden soll. Die Vorrichtung **2** weist einen ersten Wärmeübertrager **3** und einen zweiten Wärmeübertrager **4** auf, welche beide von rechteckigen fluiddurchströmten übereinander angeordneten Rohren **5** gebildet werden. An dem ersten Wärmeübertrager **3** befinden sich auf einer der äußeren Umgebung abgewandten Seite des Wärmeübertragers **3** hier nicht sichtbare Konvektoren, wobei die Luft zur Aufheizung oder Abkühlung an den Konvektoren entlang geleitet wird. Der zweite Wärmeübertrager **4** weist lediglich bis zu einem mittleren Bereich **6** die durchgehenden Rohre **5** auf. In einem unteren Bereich **7** befinden sich nur noch Rohrabschnitte **8**, welche nicht fluiddurchströmt sind.

Eine der äußeren Umgebung zugewandte hier nicht sichtbare Seite des erste Wärmeübertragers **3** bildet eine vertikale vordere Begrenzungsebene und eine der Wand zugewandten Seite des zweiten Wärmeübertragers **4** eine vertikale hintere Begrenzungsebene **9**. Weiterhin bilden Seitenwände **10** der Rohre **5** der beiden Wärmeübertrager **3, 4** zwei seitliche vertikale Begrenzungsebenen **11**, **12** der Vorrichtung **2**. Eine obere horizontale Begrenzungsebene **13** wird von oberen Rändern **14** der beiden Wärmeübertrager **3, 4** gebildet, wohingegen eine untere horizontale Begrenzungsebene **15** von einem hier nicht sichtbaren unteren Rand des ersten Wärmeübertragers **3** und unteren Rändern **16** der Rohrabschnitt **8** gebildet wird. In dieser horizontalen unteren Begrenzungsebene **15**, welche auf einer Unterseite **17** der Vorrichtung **2** angeordnet ist, befindet sich eine Öffnung **18**, welche von dem unteren Rand des ersten Wärmetauschers **3** und von den unteren Rändern **16** der Rohrabschnitte **8** begrenzt wird. Hinter der Öffnung **18** liegt ein Freiraum **19** der Vorrichtung **2**, wobei mit "hinter der Öffnung" in diesem Fall eine vertikale Richtung ausgehende von der Öffnung **18**, also senkrecht zu der unteren Begrenzungsebene **15**, in vertikale Richtung gemeint ist. Das heißt, der Freiraum **19** ist in dem montierten Zustand der Vorrichtung **2** lediglich durch die Öffnung **18** in der Unterseite **17** zugänglich.

In dem Freiraum **19** befindet sich ein weiterer Wärmeübertrager **20**, welcher fluidtechnisch mit den Wärmeübertragern **3, 4** verbunden ist, wobei zunächst die Wärmeübertrager **3, 4** und anschließend der weitere Wärmeübertrager **20** mit dem Fluid durchströmt werden. Eine Durchströmung in umgekehrte Richtung ist allerdings auch denkbar.

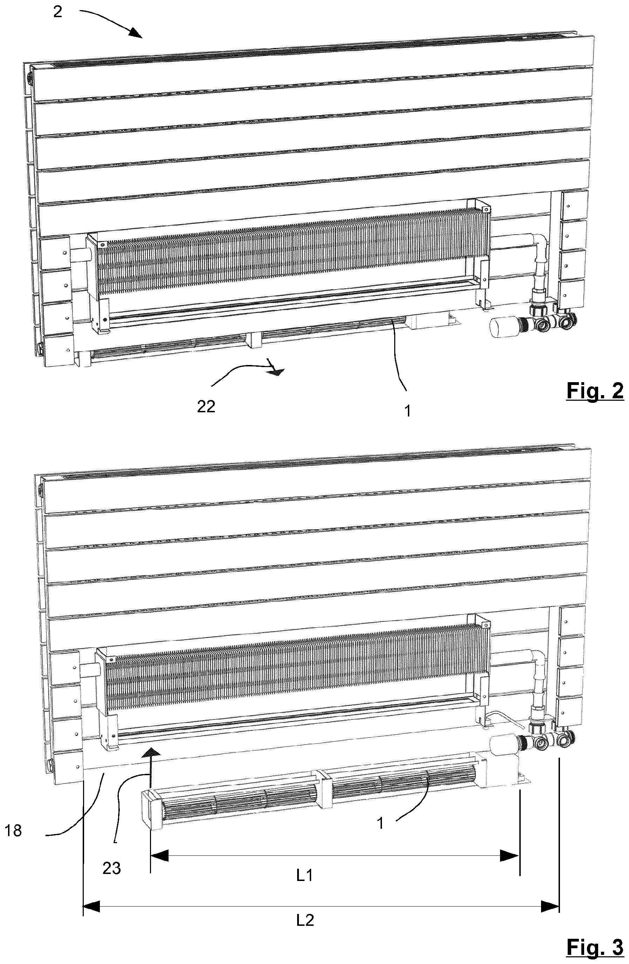

In der Figur 2 wird dargestellt wie die Ventilatoreinheit **1** von der äußeren Umgebung der Vorrichtung **2** in eine horizontale Richtung **21** unter die Vorrichtung **2** in eine Zwischenstellung geschoben wird. Nachdem die Ventilatoreinheit **1** sich nunmehr unter der Vorrichtung **2** in der Zwischenstellung befindet, wie aus der Figur 3 ersichtlich ist, ist vorgesehen, dass die Ventilatoreinheit **1** leicht gekippt in vertikale Richtung **22** durch die Öffnung **18** gehoben wird. Die Öffnung **18** weist eine Länge L1 von circa 1 m auf, so dass die Ventilatoreinheit **1** in einer horizontalen Ausrichtung mit einer Länge **L2** von etwa 70 cm problemlos in vertikale Richtung durch die Öffnung **18** geführt werden kann.

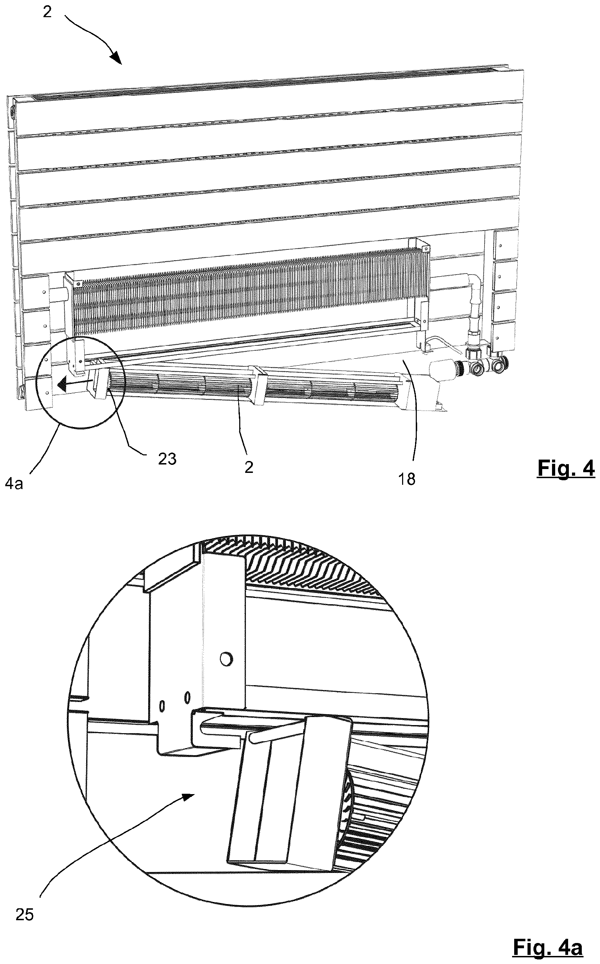

Wie in der Figur 4 dargestellt, rastet dazu zunächst ein erstes Ende **23** der Ventilatoreinheit **1** in der Vorrichtung **2** ein. Die Ventilatoreinheit **1** ist somit über eine Einschubverbindung **25** mit der Vorrichtung **2** verbunden. Ein Bereich **4a** wird nochmals vergrößert in der Figur 4a dargestellt, wobei die Figur 4a die Einschubverbindung **25** in einer vergrößerten Darstellung zeigt. Die Einschubrichtung **24** der Einschubverbindung **25** ist dabei ungefähr horizontal nach links.

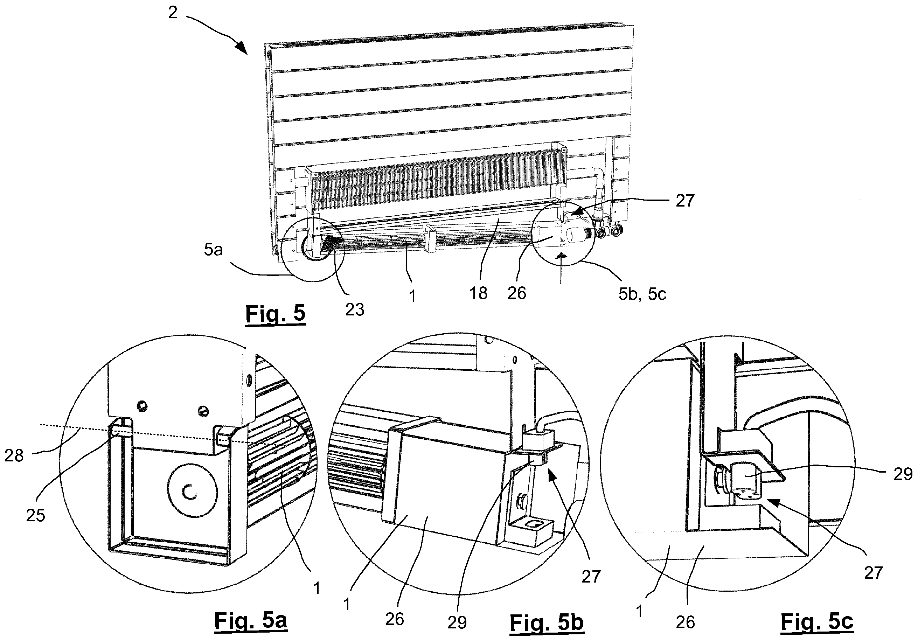

Anschließend wird, wie aus Figur 5 hervorgeht, ein zweites Ende **26** der Ventilatoreinheit **1** annährend vertikal nach oben durch die Öffnung **18** geführt und rastet dort in einer Steckverbindung **27** der Vorrichtung **2** ein. Da das erste Ende **23** der Ventilatoreinheit **1** bereits an der Vorrichtung **2** montiert ist, findet keine vollständige vertikale Bewegung statt, sondern wird die Ventilatoreinheit **1** um eine Achse **28** gemäß Figur 5a gedreht, welche horizontal durch die Einschubverbindung **25** und senkrecht zur Wand verläuft. Die Achse **28** ist rein geometrischer Natur und nicht durch ein Bauteil verkörpert. Während der Drehbewegung stützt sich das erste Ende **23** auf einer parallel zu der unteren Bezugsebene verlaufende Nase **31** gemäß Figur 4a ab. Die Figur 5a zeigt einen Bereich **5a** in der Figur 5. Analog dazu, sind Bereiche **5b** und **5c** vergrößert in der jeweiligen Figur 5b und 5c dargestellt. Die Figuren 5b und 5c zeigen eine vergrößerte Darstellung der Steckverbindung **27** aus zwei unterschiedlichen Perspektiven. An dieser Steckverbindung **27** ist weiterhin ein Stecker **29** vorhanden, welcher die Ventilatoreinheit **1** im eingebauten Zustand mit elektrischer Energie versorgt. Während des Einrastens des zweiten Endes **26** der Ventilatoreinheit **1** in der Vorrichtung **2** wird zeitgleich ein elektrischer Kontakt zwischen diesen beiden hergestellt.

Die Figur 6 zeigt nunmehr die Ventilatoreinheit **1** in dem Freiraum **19** der Vorrichtung **2** in der Einbaustellung, wobei die Ventilatoreinheit sich in der Einbaustellung im Verhältnis zu der Zwischenstellung in vertikaler Richtung betrachtet in einer erhöhten Position befindet. In der Figur 6a, welche eine vergrößerte Darstellung des Bereichs 6a gemäß Figur 6 darstellt, ist die Ventilatoreinheit **1** fest mit der Vorrichtung **2** verbunden und eine elektrische Verbindung ist hergestellt. Während des Betriebes der Ventilatoreinheit **1** wird Luft derart durch den weiteren Wärmeübertrager **20** und entlang zumindest eines Teilabschnitts **30** der Wärmeübertrager **3, 4** und der daran befindlichen nicht sichtbaren Konvektoren geleitet, dass die Luft je nach Wunsch abgekühlt oder aufgeheizt wird.

Die Ventilatoreinheit **1** kann, sofern dieses gewünscht ist, ohne Probleme wieder aus dieser Einbaustellung entnommen werden.

### Bezugszeichenliste

- L1: Länge
- L2: Länge

- 4a: Bereich
- 5a: Bereich
- 5b: Bereich
- 5c: Bereich
- 6a: Bereich

- 1: Ventilatoreinheit
- 2: Vorrichtung
- 3: Wärmeübertrager
- 4: Wärmeübertrager
- 5: Rohr
- 6: mittlerer Bereich
- 7: unterer Bereich
- 8: Rohrabschnitt
- 9: hintere Begrenzungsebene
- 10: Seitenwand
- 11: seitliche Begrenzungsebene
- 12: seitliche Begrenzungsebene
- 13,: obere Begrenzungsebene
- 14: oberer Rand
- 15: untere Begrenzungsebene
- 16: untere Rand
- 17: Unterseite
- 18: Öffnung
- 19: Freiraum
- 20: Wärmeübertrager
- 21: horizontale Richtung
- 22: vertikale Richtung
- 23: erstes Ende
- 24: Einschubrichtung
- 25: Einschubverbindung
- 26: zweites Ende
- 27: Steckverbindung
- 28: Achse
- 29: Stecker
- 30: Teilabschnitt

## Patentansprüche

1. Vorrichtung (2) zum Heizen und/oder Kühlen zur Anordnung an einer Wand sowie oberhalb eines Bodens eines Gebäudes,
- mit zumindest einem als Heizplatte ausgebildeten Wärmeübertrager (3, 4) zur Übertragung von Wärme auf Luft, und
- mindestens einer Ventilatoreinheit (1), die die zu temperierende Luft von unten nach oben über zumindest einen Teilabschnitt (30) der Vorrichtung (2) an dem mindestens einem Wärmeübertrager (3, 4) vorbei leitet,
wobei im montierten Zustand der Vorrichtung der Wärmeübertrager (3, 4) eine vordere Begrenzungsebene und eine hintere Begrenzungsebene (9), eine obere Begrenzungsebene (13) und eine untere Begrenzungsebene (15) sowie zwei seitliche Begrenzungsebenen (11, 12) aufweist,
wobei die beiden seitlichen Begrenzungsebenen (11, 12) sich jeweils senkrecht zu einer von dem Boden gebildeten horizontalen Fläche sowie senkrecht zu einer von der Wand gebildeten vertikalen Fläche erstrecken,
wobei die vordere Begrenzungsebene und die hintere Begrenzungsebene (9) der Vorrichtung (2) jeweils senkrecht zu dem Boden und parallel zu der Wand ausgerichtet sind,**dadurch gekennzeichnet, dass** die Vorrichtung (2) an einer Unterseite (17) eine Öffnung (18) aufweist, durch die die mindestens eine Ventilatoreinheit (1) aus einer äußeren Umgebung der Vorrichtung (2) in einen inneren Freiraum (19) der Vorrichtung (2) führbar ist,
wobei die mindestens eine Ventilatoreinheit (1) langgestreckt und starr ausgebildet ist und eine in Längsrichtung der Vorrichtung (2) betrachtete Länge (L1) der Öffnung (18) größer als eine Länge (L2) der mindestens einen Ventilatoreinheit (1) ist,wobei der innere Freiraum (19) so beschaffen ist, dass die mindestens eine Ventilatoreinheit (1) im Anschluss an eine horizontale Bewegung der Ventilatoreinheit (1) in eine Zwischenstellung, in der sich die mindestens eine Ventilatoreinheit (1) unterhalb der unteren Begrenzungsebene (15) der Vorrichtung (2) befindet, in eine Einbaustellung überführbar ist, in der die mindestens eine Ventilatoreinheit (1) sich im Vergleich mit der Zwischenstellung in einer in eine vertikale Richtung erhöhten Position befindet.

2. Vorrichtung (2) nach Anspruch 1, **dadurch gekennzeichnet, dass** die Länge (L2) der Ventilatoreinheit (1) mindestens 50%, vorzugsweise mindestens 60%, weiter vorzugsweise 70% einer horizontalen Länge der Vorrichtung (2) entspricht.

3. Vorrichtung (2) nach Anspruch 1 oder 2, **dadurch gekennzeichnet, dass** die Länge (L2) der Ventilatoreinheit (1) mindestens 40 cm, vorzugsweise mindestens 50 cm, weiter vorzugsweise mindestens 60 cm entspricht.

4. Vorrichtung (2) nach einem der Ansprüche 1 bis 3, **dadurch gekennzeichnet, dass** zwischen der Vorrichtung (2) und der mindestens einen Ventilatoreinheit (1) zumindest eine Steckverbindung (27) vorhanden ist.

5. Vorrichtung (2) nach einem der Ansprüche 1 bis 4, **dadurch gekennzeichnet, dass** die Ventilatoreinheit (1) ein Tangentialventilator ist, wobei eine Welle einer Ventilatorwalze horizontal verläuft.

6. Vorrichtung (2) nach einem der Ansprüche 1 bis 5, **dadurch gekennzeichnet, dass** die Ventilatoreinheit (1) in ihrer Einbaustellung bündig an die Öffnung (18) anschließt.

7. Vorrichtung (2) nach einem der Ansprüche 1 bis 6, **dadurch gekennzeichnet, dass** an dem Wärmeübertrager zumindest ein Konvektor angeordnet ist.

8. Vorrichtung (2) nach einem der Ansprüche 1 bis 6, **dadurch gekennzeichnet, dass** der mindestens eine Wärmeübertrager (3, 4) von Rohren gebildet wird.

9. Vorrichtung (2) nach einem der Ansprüche 1 bis 8, **dadurch gekennzeichnet, dass** das der mindestens eine Wärmeübertrager (3, 4) mindestens eine fluiddurchströmbare Komponenten aufweist.

10. Vorrichtung (2) nach einem der Ansprüche 1 bis 9, **gekennzeichnet durch** einen weiteren Wärmeübertrager (20), wobei dieser weitere Wärmeübertrager (20) vorzugsweise oberhalb und unterhalb der Ventilatoreinheit (1) und vorzugsweise hinter dem Wärmeübertrager (3) oder zwischen zwei Wärmeübertragern (3, 4) angeordnet ist, wobei der weitere Wärmeübertrager (20) mindestens ein fluiddurchströmbares Elemente und/oder eine elektrische Heizeinrichtung aufweist.

11. Vorrichtung (2) nach Anspruch 10, **dadurch gekennzeichnet, dass** die mindestens eine fluiddurchstömbare Komponente des Wärmeübertragers (3, 4) und das mindestens eine fluiddurchströmbare Element des weiteren Wärmeübertragers (20) in Reihe oder parallel geschaltet sind.

12. Verfahren zur Anbringung mindestens einer Ventilatoreinheit (1) an einer Vorrichtung (2) zum Heizen und/oder Kühlen, die an einer Wand sowie oberhalb eines Bodens eines Gebäude montiert ist,
wobei die Vorrichtung (2) zumindest einen als Heizplatte ausgebildeten Wärmeübertrager (3, 4) zur Übertragung von Wärme auf Luft, und mindestens eine Ventilatoreinheit (1) aufweist, die die zu temperierende Luft von unten nach oben über zumindest einen Teilabschnitt (30) der Vorrichtung (2) an dem mindestens einem Wärmeübertrager (3, 4) vorbei leitet,
wobei der Wärmeübertrager (3, 4) eine vordere Begrenzungsebene und eine hintere Begrenzungsebene (9), eine obere Begrenzungsebene (13) und eine untere Begrenzungsebene (15) sowie zwei seitliche Begrenzungsebenen (11, 12) aufweist,
wobei die beiden seitlichen Begrenzungsebenen (11, 12) sich jeweils senkrecht zu einer von dem Boden gebildeten horizontalen Fläche sowie senkrecht zu einer von der Wand gebildeten vertikalen Fläche erstrecken,
wobei die vordere Begrenzungsebene und die hintere Begrenzungsebene (9) der Vorrichtung (2) jeweils senkrecht zu dem Boden und parallel zu der Wand ausgerichtet sind,
wobei die Vorrichtung (2) an einer Unterseite (17) eine Öffnung (18) aufweist, durch die die mindestens eine Ventilatoreinheit (1) aus einer äußeren Umgebung der Vorrichtung (2) in einen inneren Freiraum (19) der Vorrichtung (2) geführt wird und
wobei die mindestens eine Ventilatoreinheit (1) langgestreckt und starr ausgebildet ist, **dadurch gekennzeichnet, dass**
- die mindestens eine Ventilatoreinheit (1) in einer annähernd horizontalen Ausrichtung von vorne aus einer äußeren Umgebung der Vorrichtung (2) zunächst in eine im wesentlichen horizontale Richtung (21) unter die Vorrichtung (2) in eine Zwischenstellung geführt wird und anschließend
- die mindestens eine Ventilatoreinheit (1) derart in eine Einbaustellung überführt wird, dass sie sich in der Einbaustellung im Vergleich mit der Zwischenstellung in einer - in vertikaler Richtung betrachtet - erhöhten Position befindet und in umgekehrter Richtung wieder aus der Vorrichtung (2) entnommen werden kann.

13. Verfahren nach Anspruch 12, **dadurch gekennzeichnet, dass** zunächst ein erstes Ende (23) der Ventilatoreinheit (1) und anschließend ein zweites Ende (26) der Ventilatoreinheit (1) mechanisch in der Vorrichtung (2) einrastet.

14. Verfahren nach Anspruch 12 oder 13, **dadurch gekennzeichnet, dass** die mindestens eine Ventilatoreinheit (1) werkzeuglos befestigt und entnommen werden kann.

15. Verfahren nach einem der Ansprüche 12 bis 14, **dadurch gekennzeichnet, dass** an einer Steckverbindung (27) mit der mechanischen Einrastung gleichzeitig ein elektrischer Kontakt zwischen der Ventilatoreinheit (1) und der Vorrichtung (2) hergestellt wird.

## Claims

1. Device (2) for heating and/or cooling for mounting on a wall and above a floor of a building
- with at least one heat exchanger (3, 4) in the form of a heater plate for transferring heat to the air, and
- at least one fan unit (1) which diverts the air to be heated or cooled from the bottom up through at least one subsection (30) of the device (2) past the at least one heat exchanger (3, 4),
wherein when the device (2) is installed the heat exchanger (3, 4) has one front delimiting plane and one rear delimiting plane (9), one upper delimiting plane (13) and one lower delimiting plane (15) as well as two lateral delimiting planes (11, 12),
wherein the two lateral delimiting planes (11, 12) each extend perpendicularly to a horizontal surface formed by the ground and perpendicularly to a vertical surface formed by the wall,
wherein the front delimiting plane and the rear delimiting plane (9) of the device (2) are each aligned perpendicularly to the ground and parallel to the wall, **characterised in that** an underside (17) of the device (2) is furnished with an aperture (18) through which the at least one fan unit (1) can be guided from an environment outside the device (2) into an interior free space (19) of the device (2),
wherein the at least one fan unit (1) is elongated and rigid and a length (L1) of the aperture (18) in the lengthwise direction of the device (2) is greater than a length (L2) of the at least one fan unit (1)
wherein the interior free space (19) is configured in such manner that following a horizontal movement of the fan unit (1) into an intermediate position in which the at least one fan unit (1) is located below the lower delimiting plane (15) of the device (2), the at least one fan unit (1) can be shifted to an installation position in which the at least one fan unit (1) is located in a position that is vertically higher than the intermediate position.

2. Device (2) according to claim 1, **characterised in that** the length (L2) of the fan unit (1) is equal to at least 50%, preferably at least 60%, more preferably 70% of a horizontal length of the device (2).

3. Device (2) according to claim 1 or 2, **characterised in that** the length (L2) of the fan unit (1) is equal to at least 40 cm, preferably at least 50 cm, more preferably at least 60 cm.

4. Device (2) according to any one of claims 1 to 3, **characterised in that** at least one plug connection (27) is present between the device (2) and the at least one fan unit (1).

5. Device (2) according to any one of claims 1 to 4, **characterised in that** the fan unit (1) is a tangential fan, wherein a shaft of a fan roller extends horizontally.

6. Device (2) according to any one of claims 1 to 5, **characterised in that** in the installed position the fan unit (1) lies flush with the aperture (18).

7. Device (2) according to any one of claims 1 to 6, **characterised in that** at least one convector is arranged on the heat exchanger.

8. Device (2) according to any one of claims 1 to 6, **characterised in that** the at least one heat exchanger (3, 4) is made up of pipes.

9. Device (2) according to any one of claims 1 to 8, **characterised in that** the at least one heat exchanger (3, 4) includes at least one component through which a fluid can flow.

10. Device (2) according to any one of claims 1 to 9, **characterised by** an additional heat exchanger (20), wherein said additional heat exchanger (20) is preferably arranged above and below the fan unit (1) and preferably behind the heat exchanger (3) or between two heat exchangers (3, 4), wherein the additional heat exchanger (20) includes at least one element through which a fluid can flow and/or an electric heating device.

11. Device (2) according to claim 10, **characterised in that** the t least one component of the heat exchanger (3, 4) through which a fluid can flow and the at least one element of the additional heat exchanger (20) through which a fluid can flow are connected in series or in parallel.

12. Method for attaching at least one fan unit (1) to a device (2) for heating and/or cooling that is mounted on a wall and above a floor of a building,
wherein the device (2) includes at least one heat exchanger (3, 4) in the form of a heater plate for transferring heat to the air and at least one fan unit (1) which diverts the air to be heated or cooled from the bottom up through at least one subsection (30) of the device (2) past the at least one heat exchanger (3, 4),
wherein the heat exchanger (3, 4) has one front delimiting plane and one rear delimiting plane (9), one upper delimiting plane (13) and one lower delimiting plane (15) as well as two lateral delimiting planes (11, 12),
wherein the two lateral delimiting planes (11, 12) each extend perpendicularly to a horizontal surface formed by the ground and perpendicularly to a vertical surface formed by the wall,
wherein the front delimiting plane and the rear delimiting plane (9) of the device (2) are each aligned perpendicularly to the ground and parallel to the wall,
wherein an underside (17) of the device (2) is furnished with an aperture (18) through which the at least one fan unit (1) can be guided from an environment outside the device (2) into an interior free space (19) of the device (2), and
wherein the at least one fan unit (1) is elongated and rigid **characterised in that**
- the at least one fan unit (1) in an approximately horizontal position is first guided from the front from an environment outside the device (2) in a substantially horizontal direction (21) below the device (2) into an intermediate position and then the at least
- one fan unit (1) is shifted to an installation position in such manner that in the installation position it is located in a position that is vertically higher than the intermediate position and can be removed from the device (2) again in the opposite direction.

13. Method according to claim 12, **characterised in that** first a first ende (23) of the fan unit (1) and then a second end (26) of the fan unit (1) engages mechanically in der device (2).

14. Method according to claim 12 or 13, **characterised in that** the at least one fan unit (1) can be fastened and removed without tools.

15. Method according to any one of claims 12 to 14, **characterised in that** an electrical contact is made between der fan unit (1) and der device (2) at a plug connection (27) at the same time as the mechanical engagement.

## Revendications

1. Dispositif (2) pour chauffer et/ou refroidir pour installation sur un mur ainsi qu'au-dessus d'un sol d'un bâtiment,
- avec au moins un caloporteur (3, 4) constitué comme une plaque chauffante pour transmettre de la chaleur à l'air, et
- au moins une unité de ventilateur (1), qui fait passer l'air à mettre à température du bas vers le haut sur au moins une partie de section (30) du dispositif (2) sur le devant d'au moins un caloporteur (3, 4),
à l'état monté du dispositif, le caloporteur (3, 4) comportant un plan de délimitation avant et un plan de délimitation arrière (9), un plan de délimitation supérieur (13) et un plan de délimitation inférieur (15) ainsi que deux plans de délimitation latéraux (11, 12),
les deux plans de délimitation latéraux (11, 12) s'étendant respectivement perpendiculairement par rapport à une surface horizontale formée par le sol ainsi que perpendiculairement par rapport à une surface verticale formée par le mur,
le plan de délimitation avant et le plan de délimitation arrière (9) du dispositif (2) étant respectivement orientés perpendiculairement par rapport au sol et parallèlement par rapport au mur,
**caractérisé en ce que**
le dispositif (2) comporte sur sa face inférieure (17) une ouverture (18) à travers laquelle au moins une unité de ventilateur (1) peut être guidée dans un espace libre intérieur (19) du dispositif (2) depuis un environnement extérieur du dispositif (2),
au moins une unité de ventilateur (1) étant constituée allongée et rigide et une longueur (L1) de l'ouverture (18) observée dans le sens longitudinal du dispositif (2) étant plus grande qu'une longueur (L2) d'au moins une unité de ventilateur (1),
l'espace libre intérieur (19) étant créé de telle manière qu'au moins une unité de ventilateur (1) suite à un mouvement horizontal de l'unité de ventilateur (1) dans une position intermédiaire dans laquelle se trouve au moins une unité de ventilateur (1) en dessous du plan de délimitation inférieur (15) du dispositif (2), peut être convertie en une position de montage dans laquelle au moins une unité de ventilateur (1) se trouve dans une position surélevée dans une direction verticale en comparaison de la position intermédiaire.

2. Dispositif (2) selon la revendication 1, **caractérisé en ce que** la longueur (L2) de l'unité de ventilateur (1) correspond au moins à 50%, de préférence au moins à 60%, de préférence encore à 70% à une longueur horizontale du dispositif (2).

3. Dispositif (2) selon la revendication 1 ou 2, **caractérisé en ce que** la longueur (L2) de l'unité de ventilateur (1) correspond au moins à 40 cm, de préférence au moins à 50 cm, de préférence encore au moins à 60 cm.

4. Dispositif (2) selon l'une quelconque des revendications 1 à 3, **caractérisé en ce qu'**entre le dispositif (2) et au moins une unité de ventilateur (1) il y a au moins une connexion (27).

5. Dispositif (2) selon l'une quelconque des revendications 1 à 4, **caractérisé en ce que** l'unité de ventilateur (1) est un ventilateur tangentiel, un arbre d'un cylindre de ventilateur passant horizontalement.

6. Dispositif (2) selon l'une quelconque des revendications 1 à 5, **caractérisé en ce que** l'unité de ventilateur (1) vient affleurer l'ouverture (18) dans sa position de montage.

7. Dispositif (2) selon l'une quelconque des revendications 1 à 6, **caractérisé en ce qu'**au moins un convecteur est disposé sur le caloporteur.

8. Dispositif (2) selon l'une quelconque des revendications 1 à 6, **caractérisé en ce qu'**au moins un caloporteur (3, 4) est formé de tubes.

9. Dispositif (2) selon l'une quelconque des revendications 1 à 8, **caractérisé en ce qu'**au moins un caloporteur (3, 4) comporte au moins un composant pouvant être traversé par un fluide.

10. Dispositif (2) selon l'une quelconque des revendications 1 à 9, **caractérisé par** un autre caloporteur (20), cet autre caloporteur (20) étant de préférence disposé au-dessus ou en dessous de l'unité de ventilateur (1) et de préférence derrière le caloporteur (3) ou entre deux caloporteurs (3, 4), l'autre caloporteur (20) comportant au moins un élément pouvant être traversé par un fluide et/ou un système de chauffage électrique.

11. Dispositif (2) selon la revendication 10, **caractérisé en ce qu'**au moins un composant pouvant être traversé par un fluide du caloporteur (3, 4) et au moins un élément pouvant être traversé par un fluide de l'autre caloporteur (20) sont montés en série ou parallèlement.

12. Procédé de montage d'au moins une unité de ventilateur (1) sur un dispositif (2) pour le chauffage et/ou le refroidissement, qui est monté sur un mur et au-dessus d'un sol d'un bâtiment,
le dispositif (2) comportant au moins un caloporteur (3, 4) constitué comme une plaque chauffante pour transmettre de la chaleur à l'air et au moins une unité de ventilateur (1), qui fait passer l'air à mettre à température du bas vers le haut sur au moins une partie de section (30) du dispositif (2) sur le devant d'au moins un caloporteur (3, 4),
le caloporteur (3, 4) comportant un plan de délimitation avant et un plan de délimitation arrière (9), un plan de délimitation supérieur (13) et un plan de délimitation inférieur (15) ainsi que deux plans de délimitation latéraux (11, 12),
les deux plans de délimitation latéraux (11, 12) s'étendant respectivement perpendiculairement par rapport à une surface horizontale formée par le sol ainsi que perpendiculairement par rapport à une surface verticale formée par le mur,
le plan de délimitation avant et le plan de délimitation arrière (9) du dispositif (2) étant respectivement orientés perpendiculairement par rapport au sol et parallèlement par rapport au mur,
le dispositif (2) comportant sur sa face inférieure (17) une ouverture (18) à travers laquelle au moins une unité de ventilateur (1) est guidée dans un environnement extérieur du dispositif (2) dans un espace libre intérieur (19) du dispositif (2) et
au moins une unité de ventilateur (1) étant constituée allongée et rigide,
**caractérisé en ce qu'**
au moins une unité de ventilateur (1) dans une orientation à peu près horizontale est guidée par l'avant depuis un environnement extérieur du dispositif (2) d'abord dans une direction (21) pour l'essentiel horizontale sous le dispositif (2) dans une position intermédiaire et ensuite
- au moins une unité de ventilateur (1) est convertie en une position de montage de telle manière qu'elle se trouve dans la position de montage en comparaison à la position intermédiaire dans une position relevée, observée en direction verticale et peut être à nouveau enlevée du dispositif (2) dans la direction inverse.

13. Procédé selon la revendication 12, **caractérisé en ce que** d'abord une première extrémité (23) de l'unité de ventilateur (1) et ensuite une deuxième extrémité (26) de l'unité de ventilateur (1) s'enclenchent mécaniquement dans le dispositif (2).

14. Procédé selon la revendication 12 ou 13, **caractérisé en ce qu'**au moins une unité de ventilateur (1) peut être fixée et démontée sans outil.

15. Procédé selon l'une quelconque des revendications 12 à 14, **caractérisé en ce qu'**un contact électrique entre l'unité de ventilateur (1) et le dispositif (2) peut être simultanément établi sur une connexion (27) avec l'enclenchement mécanique.
